# EUROPÄISCHE PATENTSCHRIFT

(11) **EP 2 409 164 B1**
(45) Veröffentlichungstag und Bekanntmachung des Hinweises auf die Patenterteilung: **18.10.2017**
(21) Anmeldenummer: 10716743.9
(22) Anmeldetag: 06.03.2010
(51) Int. Cl.: G01Q 10/04, H02N 2/02

(54) **VORRICHTUNG UND VERFAHREN ZUR ELEKTROMECHANISCHEN POSITIONIERUNG**
APPARATUS AND METHOD FOR ELECTROMECHANICAL POSITIONING
DISPOSITIF ET MÉTHODE DE POSITIONNEMENT ELECTROMECANIQUE

(30) Priorität: 18.03.2009 DE 102009013849
(43) Veröffentlichungstag der Anmeldung: 25.01.2012
(73) Patentinhaber: Forschungszentrum Jülich GmbH, 52425 Jülich (DE)
(72) Erfinder: VOIGTLÄNDER, Bert, 52428 Jülich (DE); COENEN, Peter, 52428 Jülich (DE); CHEREPANOV, Vasily, 52428 Jülich (DE)
(86) Internationale Anmeldenummer: PCT/DE2010/000246
(87) Internationale Veröffentlichungsnummer: WO 2010/105592

(56) Entgegenhaltungen:
- CN-A- 1 996 737
- DE-A1- 4 329 163
- JP-A- 2002 233 171
- US-A- 4 874 979
- "MOUNTS FOR EXCHANGEABLE TIPS AND TUBE SCANNERS" IBM TECHNICAL DISCLOSURE BULLETIN, INTERNATIONAL BUSINESS MACHINES CORP. (THORNWOOD), US, Bd. 33, Nr. 10A, 1. März 1991 (1991-03-01) , Seite 277/278, XP000110039 ISSN: 0018-8689

## Beschreibung

Die Erfindung betrifft eine Vorrichtung und ein Verfahren zur elektromechanischen Positionierung.

Derartige Vorrichtungen werden für die Positionierung von Sonden im Nanometerbereich, beispielsweise in der Rastersondenmikroskopie eingesetzt. Sie wandeln eine elektrische Eingangsgröße (Spannung) in eine mechanische Ausgangsgröße (Position) um. Dabei wird ein beispielsweise röhrenförmiges Piezoelement angesteuert, um einen im Innern des Piezoelements beweglichen Läufer, einen Draht, der als Sonde fungiert, relativ zu der röhrenförmigen Reibungsoberfläche mittels eines Trägheitsantriebes zu bewegen. Um diese Bewegung zu bewirken, kann das röhrenförmige Piezoelement mit einem sägezahnförmigen Spannungsverlauf beaufschlagt werden. Die Spannung wird so zwischen einer inneren und einer äußeren Elektrode des Piezoelements angelegt, dass der Spannungsverlauf zu einem abwechselnden Haften und Gleiten des Läufers im Piezoelement führt. Der Läufer haftet an der Reibungsoberfläche im Innern des Piezoelements während der flachen Flanken des Sägezahnpulses und gleitet während dessen steilen Flanken.

Nachteilig können schnelle Bewegungen während der Sägezahnpulse an den Piezoelementen zu einem unerwünschten Rütteln der Unterlage des Piezoelements oder des bewegten Objekts selbst führen.

Der beschriebene Antrieb nebst Piezoelement ist beispielsweise der WO 94/06160 A1 zu entnehmen. Der Läufer kann mit einer Präzision bis hinab in den Nanometerbereich bewegt werden. Der genannte Läufer besteht aus einem Draht. Die Kraft, mit der der Läufer gegen die Reibungsoberfläche gedrückt wird, ist kritisch für die Funktion des Trägheitsantriebes. Beim Draht bzw. Läufer wird diese Kraft durch Verbiegen des Drahtes selbst bewirkt. Die genaue Kraft muss empirisch durch unterschiedliches Verbiegen des Drahtes angepasst werden. Dies ist nachteilig ein zeitaufwendiger und schwieriger Verfahrensschritt. Das Ende des Drahtes bildet während der Rastertunnelmikroskopie die Abtastspitze bzw. Sonde. Bei jedem Austausch der Spitze muss nachteilig der gesamte Läufer ausgetauscht werden und die Kraft für den ausgetauschten Läufer neu angepasst werden. Im Vakuum ist das Austauschen des Läufers sogar fast unmöglich, da der nadelförmige Läufer keine Vorrichtung zum Entfernen aus der röhrenförmigen Reibungsoberfläche aufweist.

Aus der Druckschrift DE 44 40 758 A1 ist ein Läufer bestehend aus einer Masseeinheit nebst Biegeelement bekannt, so dass die Stärke der Reibungskraft über die Verbiegung des Biegeelements eingestellt werden kann. Dadurch können auch schwerere Objekte positioniert werden.

Nachteilig ist an dieser Positioniereinrichtung, dass nur sehr wenig Platz zur Handhabbarkeit der Vorrichtung vorhanden ist. Wenig Platz ist vorhanden, weil die Positioniereinheit möglichst klein gebaut werden sollte, um größtmögliche Stabilität und hohe Eigenfrequenzen der Vorrichtung im Betrieb zu erreichen. Die Masseeinheit, von der letztendlich die Positionierung ausgeht, ist nachteilig schief gegen die röhrenförmige Reibungsoberfläche und das röhrenförmige Piezoelement geneigt. Dies hat nachteilig zur Folge, dass die Masseeinheit nicht axial zur Reibungsfläche und zum Röhrenpiezoelement ausgerichtet ist. Anderseits bedeutet die geneigte Anordnung der Masseeinheit eine ungenaue Führung und eine ungewollte Variation in den Reibungseigenschaften. Diese Variation in den Reibungseigenschaften beeinträchtigt die Funktion des Trägheitsantriebes und kann zu einem Ausfall der Positioniereinheit führen, da der Läufer sich verklemmen kann.

Auch der Trägheitsantrieb selbst hat Nachteile. Beim Trägheitsantrieb bewegen sich die Masse des Piezoelements und die Masse des Läufers mit hohen Beschleunigungen. Dies hat nachteilig zur Folge, dass sich die Beschleunigungen in Form von Rütteln und Vibrationen auf am Läufer befestigte Objekte übertragen. Weiterhin werden diese Kräfte am Piezoelement nach dem dritten Newtonschen Axiom auch auf die Unterlage übertragen. So können sich auch Rüttelbewegungen auf einer Grundplatte, auf der der Nanopositionierer befestigt ist, übertragen.

Eine andere Positioniereinrichtung mit einem anderen Antriebsverfahren ist daher der US 4,874,979 zu entnehmen. Ein innerer Zylinder als Läufer wird dabei abwechselnd von drei piezoelektrisch getriebenen Klemmen gehalten. Der Abstand der Klemmen wird durch die Ausdehnung oder das Zusammenziehen des Piezoelements verstellt und führt zur gerichteten Bewegung des inneren Zylinders. Vorteilhaft vermeidet dieser Nanomanipulator die schnellen Beschleunigungen des Trägheitsantriebs. Nachteilig ist aber, dass mindestens eine der Klemmen stets unter Hochspannung stehen muss, damit der innere Zylinder festgehalten wird. Das Festhalten des Zylinders durch die Klemmen ist eine notwendige Voraussetzung für den Antrieb dieser, auch als "Inchwurm" bezeichneten Positioniereinheit. Beim "Inchwurm" muss also ständig eine Spannung an den piezoelektrischen Klemmen angelegt werden, um den Läufer festzuhalten. Bei der Anwendung der Positioniereinheit in einem Rastertunnelmikroskop kann diese Spannung zum Klemmen des Läufers aber nachteilig elektrische Störungen auf den gemessenen Tunnelstrom übertragen. Um das zu vermeiden darf diese Hochspannung nur ein sehr geringes Rauschen haben, beispielsweise < 1mV. Dies bedeutet zusätzlichen Aufwand und Kosten, um eine so stabile Spannungsversorgung herzustellen.

Die DE 43 29 163 A1 offenbart eine piezoelektrische Antriebseinheit mit einem piezoelektrischen Antriebselement, die Klemmkörper aufweist.

Die Schrift US 4,874,979 A zeigt eine Vorrichtung, bei der ein mit einem Piezoelement verbundenes statisches, nicht elastisches Reibungsmittel zur Aufnahme einer Normalkraft vorhanden ist, welche auf einen Läufer ausgeübt wird

Die Schrift JP 2002 233171 A offenbart eine Vorrichtung mit wenigstens einem röhrenförmigen Piezoelement zur elektromagnetischen Positionierung eines Läufers im Inneren entlang der Längsachse des Piezoelements, bei dem ein mit dem Piezoelement verbundenes elastisches Reibungsmittel mit einer Reibungsfläche zur Ausübung einer permanenten, konstanten Normalkraft des Läufers vorhanden ist.

Die Schrift CN 1 996 737 A beschreibt eine Vorrichtung mit zwei hintereinander angeordneten röhrenförmigen Piezoelementen zur elektromechanischen Positionierung eines Läufers im Inneren entlang der Längsachse der röhrenförmigen Piezoelemente, die Reibungsmittel aufweist, welche eine Normalkraft auf die Oberfläche des Läufers ausüben.

Aufgabe der Erfindung ist es, eine Vorrichtung zur elektromechanischen Positioniereinrichtung eines Läufers bereit zu stellen, die klein und gut handhabbar ist und zudem eine exakte Führung eines Läufers im Innern eines röhrenförmigen Piezoelements unabhängig vom gewählten Antrieb erlaubt. Ferner ist es Aufgabe der Erfindung, ein Verfahren zur Steuerung derartiger Vorrichtungen anzugeben, welches im Gegensatz zum bekannten Trägheitsantrieb rüttelfrei arbeitet.

Die Aufgabe wird durch eine Vorrichtung nach Anspruch 1 sowie ein Verfahren nach Anspruch 3 gelöst. Der Unteranspruch 2 gibt vorteilhafte Ausgestaltungen an. Die Vorrichtung weist mindestens ein röhrenförmiges Piezoelement zur elektromechanischen Positionierung eines Läufers im Innern des Piezoelements auf. Das Piezoelement weist Elektroden und Anschlüsse zum Ansteuern auf.

Die Vorrichtung weist wenigstens ein mit dem Piezoelement verbundenes elastisches Mittel zur Ausübung einer Normalkraft auf den Läufer im Innern des Piezoelements auf. Das elastische Mittel weist eine Reibungsfläche auf. Diese Reibungsfläche ist die Kontaktfläche zwischen elastischem Mittel und Läufer.

Das elastische Mittel besteht in einer Ausgestaltung der Erfindung aus einem leitfähigen Material, z. B. aus Kupfer-Beryllium. Durch die Leitfähigkeit kann der durch die Abtastspitze abgeleitete Tunnelstrom direkt über das Mittel abgeleitet und ausgewertet werden.

Das elastische Mittel kann zur Ausübung der Normalkraft gebogen sein. Das erfindungsgemäße Mittel kann z. B. eine Kabelverbindung sein, die mittels gebogener Innenteile eine Federkraft als Normalkraft auf den Läufer auszuüben vermag. Das elastische Mittel kann auch eine Blattfeder sein. Jedes elastische Mittel übt vorteilhaft eine konstante, permanente Normalkraft auf den Läufer aus.

Kupfer-Beryllium als Material für das Mittel weist vorteilhaft eine hohe Elastizität auf. Es ist vergleichsweise hart und gut bearbeitbar, um es zu einem gebogenen elastischen Mittel auszugestalten. Dies kann durch Einkerben eines z. B. röhrenförmigen Mittels geschehen. Zudem ist es elektrisch leitfähig. Andere Materialien mit vergleichbaren Eigenschaften sind verwendbar.

Neben den elastischen Mitteln können auch statische Reibungsmittel, die direkt oder indirekt mit dem Piezoelement verbunden sind, zur Führung des Läufers und zur Aufnahme von Normalkräften verwendet werden. Das statische Mittel weist eine Reibungsfläche auf. Diese Reibungsfläche ist die Kontaktfläche zwischen dem statischen Mittel und Läufer. Eine mögliche Ausgestaltung von statischen Reibungsmitteln sind Saphirhalbkugeln. Statische Reibungsmittel und elastische Reibungsmittel werden im Folgenden mit Reibungsmittel bezeichnet.

Die Reibungsmittel, die an einer axialen Position des Piezoelements befestigt sind, bilden eine Gruppe von Reibungsmitteln aus. Eine Gruppe umfasst demnach mindestens ein einziges Reibungsmittel. Bei einer axialen Ausdehnung oder Kontraktion des Piezoelements werden die Reibungsmittel einer Gruppe synchron bewegt.

Das oder die Reibungsmittel können direkt mit dem Piezoelement verbunden sein. Es kann vorzugsweise auch indirekt über ein Verbindungselement mit dem Piezoelement verbunden sein.

Als Verbindungselemente sind beispielsweise mehr oder weniger kurze Röhrchen und Scheiben möglich, die mit einem Ende des Piezoelements verbunden sind. Ein kurzes Verbindungselement wird im Weiteren als endständige Scheibe bezeichnet. Die Scheibe weist eine Öffnung auf. Die Scheibe besteht vorzugsweise aus einer Keramik. In der endständigen Scheibe, bzw. deren Öffnung wird der Läufer geführt bzw. positioniert. Lange röhrenförmige Verbindungselemente werden im Weiteren als koaxiale Halterung bezeichnet und bewirken eine synchrone Bewegung mehrerer Reibungsmittel. Verbindungselemente als solche, berühren während der Führung des Läufers diesen nicht, sondern nur die an den Verbindungselementen angeordneten Reibungsmittel.

An der Innenfläche der Verbindungselemente sind die Reibungsmittel angeordnet. Die Verbindungselemente weisen als Röhrchen und Scheibe eine Öffnung auf, in der der Läufer axial geführt wird. Da die Reibungsmittel bezüglich ihrer ausübenden Kräfte in das Innere des Piezoelements gerichtet sind, erfolgt die axiale Positionierung des Läufers durch die Öffnung der Verbindungselemente hindurch. Die Reibungsmittel werden z. B. über einen Haftkleber mit dem Verbindungselement und hierüber mit der Innenfläche des Piezoelements verbunden.

Reibungsmittel können an der endständigen Scheibe und auch an der koaxialen Halterung als Verbindungselement befestigt und über diese Halterung mit dem Piezoelement verbunden sein. Die koaxiale Halterung ist koaxial über fast die gesamte Länge des Piezoelements in diesem angeordnet. In der koaxialen Halterung wird der Läufer besonders vorteilhaft sehr stabil geführt. Die koaxiale Halterung kann einstückig ausgebildet sein. Sie ist lediglich an einem Ende mit dem Piezoelement verbunden. Die koaxiale Halterung kann mittels der endständigen Scheibe als Verbindungselement an einem Ende mit dem Piezoelement verbunden sein. Das andere Ende der koaxialen Halterung liegt frei, das heißt unbefestigt, im Innern des Piezoelements vor. Über die Längsrichtung der koaxialen Halterung können weitere Reibungsmittel angeordnet sein.

In einer Ausgestaltung der Erfindung wird der Läufer von Reibungsmitteln, die sich in einer koaxialen Halterung befinden geführt. Bei einer Auslenkung des Piezoelements, welches an einem Ende auf einer Grundplatte befestigt ist, werden somit alle Reibungsmittel synchron bewegt. Zur Positionierung des Läufers wird das Piezoelement in bekannter Weise durch einen Trägheitsantrieb mit einer sägezahnförmigen Spannung ausgelenkt. Während der flachen Flanke des Sägezahnsignals sind alle Reibungsflächen in Haftreibung und der Läufer wird mit der Piezobewegung mitgeführt. Während der steilen Flanke des Sägezahnsignals gehen die Reibungsflächen in Gleitreibung über. Der Läufer wird aufgrund seiner Trägheit dann nicht mit der Bewegung der Reibungsmittel, der koaxialen Halterung und des Piezoelements mitgeführt.

Die endständige Befestigung der koaxialen Halterung am Piezoelement bewirkt eine vollständige Übertragung der Auslenkung des Piezoelements auf den in der koaxialen Halterung geführten Läufer.

Die endständige Scheibe als Verbindungselement dient besonders vorteilhaft auch dazu, die möglicherweise als Normteile gefertigten Piezoelemente und die parallel hierzu angeordneten röhrenförmigen koaxialen Halterungen bezüglich derer Innen- bzw. Außendurchmesser aneinander anzupassen. Das elastische Mittel zur Ausübung der Normalkraft auf den Läufer wird vorzugsweise über einen Haftkleber an den Verbindungselementen, Scheibe und koaxiale Halterung, mit dem Piezoelement verbunden.

Die Reibungsmittel können an einer, zwei oder mehr axial unterschiedlichen Positionen über die Länge der koaxialen Halterung mit dieser verbunden sein. Vorzugsweise verteilen sich die Reibungselemente gleichmäßig über die gesamte Länge der koaxialen Halterung.

Vorteilhaft sind fünf oder mehr Reibungsmittel an mindestens zwei axialen Positionen der koaxialen Halterung angeordnet. Dadurch wird der Läufer besonders stabil gehalten und geführt. Von den mindestens fünf Reibungsmitteln muss mindestens eins ein elastisches Mittel sein, vorzugsweise in der Mitte der koaxialen Halterung. Es können z. B. die nahe der endständigen Scheibe und die an der gegenüberliegenden Seite endständig an der koaxialen Halterung angeordneten Reibungsmittel statische Reibungsmittel sein. In der Mitte der koaxialen Halterung kann ein einziges elastisches Mittel zur Ausübung der Normalkraft angeordnet sein. Selbstverständlich können die zwei endständigen statischen Reibungsmittel durch elastische Reibungsmittel ersetzt sein.

Die in einer axialen Position angeordneten Reibungsmittel sind zueinander vorzugsweise azimutal gleichmäßig verteilt. Die in verschiedenen axialen Positionen angeordneten Reibungsmittel sollten zueinander ebenfalls azimutal gleichmäßig verteilt sein. Dadurch wird vorteilhaft die axiale Führung des Läufers im Piezoelement und durch die Öffnungen der Verbindungselemente gewährleistet.
Sehr vorteilhaft werden Steckverbindungen für Drähte zur Führung und axialen Positionierung des Läufers verwendet. Diese Steckverbindungen weisen in einer vorteilhaften Ausgestaltung der Erfindung, beispielsweise durch eine oder mehrere Einkerbungen, elastische Federelemente mit Reibungsflächen auf. Gleichzeitig weisen die Steckverbindungen auch statische oder weitere federnde vorzugsweise gebogene Reibungsflächen auf, in denen der Läufer geführt werden kann. Die nach innen gebogene Einkerbung drückt als elastische Feder einen Läufer gegen diese Führungsflächen der Verbindung.
Es ist wichtig, dass die Reibungsmittel an der koaxialen Halterung und an der Scheibe so zueinander angeordnet sind, dass der Läufer exakt geführt wird ohne zu verklemmen oder zu verrutschen. Dies gewährleistet eine azimutale Anordnung der Reibungsmittel.
Die Vorrichtung eignet sich vorteilhaft dazu, auch nicht zylindrische Läufer zu positionieren. Der verwendete Läufer kann also eine andere als eine kreisförmige Querschnittsfläche aufweisen. Ein nicht zylindrischer Läufer kann z. B. entlang seiner axialen Längsausrichtung eingekerbt sein, um eine azimutale Rotation des Läufers während der axialen Translationsbewegung zu verhindern. Die Querschnittfläche des Läufers kann in axialer Richtung auch veränderlich sein, so dass z. B. ein kegelförmiger Läufer positioniert wird. Dies kann beispielsweise benutzt werden, um die Geschwindigkeiten in den beiden axialen Richtungen "vor und zurück" unterschiedlich zu gestalten.

In der Ausgestaltung der Erfindung weist die Vorrichtung mindestens zwei elektrisch isolierend miteinander verbundene Piezoelemente auf. Die beiden Piezoelemente sind ineinander oder hintereinander angeordnet und weisen gemeinsam wenigstens drei Gruppen von Reibungsmitteln auf, die an verschiedenen axialen Positionen an den Piezoelementen befestigt sind. Hiervon umfasst wenigstens eine Gruppe wenigstens ein elastisches Reibungsmittel. Dieses übt die Normalkraft auf den Läufer aus.

Die Piezoelemente sind miteinander verbunden, z. B. mittels eines isolierenden Klebers oder mittels eines isolierenden Verbindungselements, z. B. einer endständigen Scheibe mit Öffnung, z. B. aus einer Keramik. Statische, nicht elastische Reibungsmittel zur Aufnahme der Normalkraft, welche auf den Läufer ausgeübt wird, können ebenfalls vorgesehen sein. Wiederum bilden die Reibungsmittel, die an einer axialen Position der Piezoelemente befestigt sind, eine Gruppe von Reibungsmitteln aus. Diese sollten zueinander und zu den Reibungsmitteln anderer Gruppen, vorzugsweise azimutal, angeordnet sein. Für das Verfahren zur Positionierung eines Läufers können zum Einen, wie im Folgenden beschrieben, röhrenförmige Piezoelemente verwendet werden, zum Anderen können für dieses Verfahren auch andere Arten von Piezoelementen eingesetzt werden.

Beide Piezoelemente weisen vorteilhaft endständig ein Verbindungselement mit einer Öffnung auf. Vorteilhaft ist an diesem Verbindungselement mindestens ein Reibungsmittel zur Führung des Läufers angebracht. Diese Vorrichtung umfasst drei axial über die Länge der Piezoelemente angeordnete Gruppen von Reibungsmitteln. Mit einer Gruppe werden ein oder mehrere Reibungsmittel bezeichnet, die an einer bestimmten axialen Position am Piezoelement direkt oder indirekt befestigt sind. Alle Reibungsmittel einer Gruppe werden synchron bewegt. In dieser Ausgestaltung der Erfindung sind zwei Gruppen von Reibungsmitteln jeweils endständig an den Piezoelementen und die dritte Gruppe im Bereich der Verbindung angeordnet.

Die beiden Piezoelemente werden vorzugsweise durch eine Scheibe mit Öffnung miteinander verbunden, an der mindestens ein hieran befestigtes nach innen ragendes Reibungsmittel angeordnet bzw. befestigt ist. Die Öffnung dieser Scheibe ist axial in einer Reihe zu den Öffnungen der beiden anderen gegenüberliegenden endständigen Scheiben angeordnet. Dadurch wird die axiale Führung des Läufers in allen drei Öffnungen der Verbindungselemente gewährleistet. Auf diese Weise können zwei hintereinander angeordnete Piezoelemente durch ein Verbindungselement miteinander verbunden werden. Es können auch zwei ineinander angeordnete Piezoelemente mit jeweils unterschiedlichem Außenradius und unterschiedlicher Länge, durch ein Verbindungselement verbunden werden.

Ein Ende der miteinander verbundenen Piezoelemente ist auf einer Grundplatte befestigt. Damit bleibt die an diesem Ende befestigte Gruppe immer in Ruhe.

Erfindungsgemäße Vorrichtungen, umfassend zwei derartige Piezoelemente, gewährleisten vorteilhaft mehr Freiheitsgrade bei der Wahl des Antriebs. Es können Spannungen an die Elektroden der beiden Piezoelemente angelegt werden, die eine Bewegung des Läufers ohne ruckartige Bewegungen, wie bei der Sägezahnspannung und Trägheitsantrieb gewährleisten. Dies bewirkt besonders vorteilhaft eine deutlich störungsfreiere Positionierung des Läufers als mit Trägheitsantrieb.

Ein Verfahren zur Positionierung eines Läufers in einer derartigen Vorrichtung mit zwei hintereinander oder ineinander angeordneten Piezoelementen sieht vor, dass ein Spannungsverlauf an den Elektroden der beiden Piezoelemente angelegt wird, bei dem eine Kontraktion oder Ausdehnung der Piezoelemente zu einer axialen Positionierung des Läufers führt. In einem Schritt des Verfahrens wird einer der beiden beweglichen Gruppen von Reibungsmitteln axial bewegt und während dieser Bewegung wird der Läufer von den beiden anderen Gruppen festgehalten. In einem zweiten Schritt wird die andere der beiden Gruppen einzeln bewegt. In einem weiteren Schritt des Spannungsverlaufs werden beide beweglichen Gruppen gleichzeitig bewegt und führen den Läufer mit sich. Durch das gleichzeitige, synchrone Wirken von zwei der drei Gruppen wird der Läufer bewegt, da die Summe der Normalkräfte dieser beiden Gruppen größer ist, als die Normalkraft der einzelnen Gruppe. Das Verfahren ist vorteilhaft gegenüber dem Stand der Technik, da drei Gruppen von Reibungsmitteln den Läufer permanent festklemmen, ohne dass elektrische Spannungen hierfür angelegt sein müssen. Vorzugsweise sollte eine Vorrichtung mit zwei ineinander oder hintereinander verbundenen Piezoelementen mindestens 5 Reibungsmittel umfassen. Dieses Verfahren zur Positionierung eines Läufers beruht auf einem Wechselspiel von Haft- und Gleitreibung an den Reibungsflächen zwischen Läufer und den drei Gruppen von Reibungsmitteln. Bei einer synchronen Bewegung von zwei Gruppen bleiben die Reibungsmittel in Haftreibung zum Läufer. Bei der Bewegung von nur einer Gruppe geht diese in Gleitreibung über.

Die Positioniereinrichtung, die mit diesem Verfahren gesteuert wird, ist weniger aufwendig und kleiner als der "Inchwurm". Die erfindungsgemäße Positioniereinrichtung passt in ein röhrenförmiges Piezoelement mit einem Außendurchmesser von 3 Millimeter, während der "Inchwurm" typischerweise einen Durchmesser von 10 mm hat. Die erfindungsgemäße Positioniereinrichtung hat auch weniger und einfacher aufgebaute Piezoelemente, nämlich nur zwei statt drei beim "Inchwurm" und hat deshalb auch eine einfachere Ansteuerung. Zusätzlich ergeben sich durch die erfindungsgemäße Vorrichtung und das erfindungsgemäße Verfahren auch große Vorteile der neuen Positioniereinrichtung gegenüber den Trägheitsantrieben. So ist der erfindungsgemäße Antrieb unabhängig von der Masse des Läufers. Beim Trägheitsantrieb ist die Trägheit des Läufers gegeben durch die Masse des Läufers und ein wichtiger Parameter beim Übergang von der Haftreibung zur Gleitreibung. Nur in einem engen Bereich für die Masse des Läufers funktioniert der "slip-stick" Trägheitsantrieb einwandfrei. Vorteilhaft können die Bewegungen während des erfindungsgemäßen Verfahrens mit beliebig langsamen Geschwindigkeiten erfolgen ohne das Funktionsprinzip zu beeinträchtigen. Vorteilhaft kann neben dem hier beschriebenen Modus der Nanopositionierer ohne Umbauten auch im Modus der Trägheitstranslation betrieben werden, falls dieser Modus gewünscht ist.

Die genaue Distanz eines Translationsschrittes ist bei einem Nanopositionierer, der nach dem Prinzip der Trägheitstranslation arbeitet oft schlecht reproduzierbar und hat eine große Streuung. Bei dem erfindungsgemäßen Nanopositionierer ist die Schrittweite einer Periode der Bewegung immer gleich groß und entspricht dem Hub eines Piezoelements. Die Kraft der Klemmung mit der der Läufer festgehalten wird, ist bei Nanopositionierern, die mit Trägheitstranslation arbeiten relativ klein. Die Trägheitskraft ist durch die Masse des Läufers bestimmt. Diese ist bei den erwünschten kleinen Baugrößen ebenfalls klein. Deshalb können beim Trägheitsantrieb nur kleine Klemmkräfte verwendet werden. Bei großen Klemmkräften rutscht der Läufer nicht. Bei dem Nanopositionierer gemäß Erfindung können größere Klemmkräfte verwendet werden, was vorteilhaft zu einer höheren Stabilität des Nanopositionierers gegen Vibrationen führt. Ferner erlaubt diese Maßnahme bei der Nanopositionierung größere Kräfte auszuüben.
Vorteilhaft ist bei allen erfindungsgemäßen Vorrichtungen gewährleistet, dass der Läufer als starre Einheit ganz genau axial gelagert wird. Die Kontaktflächen zwischen dem Läufer und den
Reibungsmitteln sind sehr gleichmäßig und definiert, vorzugsweise etwa azimutal je Gruppe und gegebenenfalls auch untereinander, ausgebildet. Deshalb wird immer eine gleichmäßige, definierte Kraft von den elastischen Mitteln auf den Läufer ausgeübt. Der Läufer kann vorteilhaft besonders leicht ausgetauscht werden.
Erfindungsgemäße Positioniereinheiten mit elastischen Mitteln an den Piezoelementen werden als Herzstück eines Rastersondenmikroskops verwendet. Der erfindungsgemäße Nanopositionierer kann zur Positionierung in sehr kleinen Schritten, bis hinab in den Nanometerbereich benutzt werden. Eine kontinuierliche Bewegung in xy-Richtung (< ∼ 1µm) ist durch eine vierfache Segmentierung der Piezoelemente entlang der Längsachse möglich.
Im Weiteren wird die Erfindung an Hand von einigen Ausführungsbeispielen und der Figuren näher erläutert.
Diese Vorrichtungen mit zwei Piezoelementen können vorteilhaft in oder auf einem weiteren, größeren Piezoelement angeordnet bzw. mit diesem verbunden sein. Das größere Piezoelement bewirkt die kontinuierliche Feinbewegung in xyz-Richtung durch kontinuierliche Spannungen am Piezoelement, wohingegen die zwei ineinander oder hintereinander angeordneten beiden Piezoelemente den Schrittweisen Grobantrieb in z-Richtung besorgen.

Es zeigen:
- Figur 1:: Erstes Beispiel einer Vorrichtung P1 mit einem gebogenen, elastischen Mittel 15a und vier statischen Reibungsmitteln 15.
- Figur 2:: Zweites Beispiel einer Vorrichtung P2 mit zwei Steckverbindungen mit gebogenen, elastischen Mitteln 25a, 25b und halbkreisförmigen elastischen Führungsflächen 25a', 25b'.
- Figur 3:: Drittes Beispiel einer Vorrichtung P3, wie Figur 2, allerdings plus Masseeinheit 37.
- Figur 4:: Anwendung der Vorrichtung P2 nach Figur 2 in einem Rastersondenmikroskop.
- Figur 5:: Zwei hintereinander angeordnete, elektrisch voneinander isolierte röhrenförmige Piezoelemente (oben) zur Ausbildung einer Vorrichtung P3 sowie Spannungsverlauf (unten) zur besonders gleichförmigen Positionierung eines Läufers ohne Rütteln.
- Figur 6:: Zwei ineinander angeordnete, elektrisch voneinander isolierte röhrenförmige Piezoelemente (oben) zur Ausbildung der Vorrichtung P4 sowie Spannungsverlauf (unten) zur besonders gleichförmigen Positionierung eines Läufers ohne Rütteln.
- Figur 7:: Vorrichtung P3 mit zwei hintereinander angeordneten röhrenförmigen Piezoelementen, wie in Figur 5 gezeigt, welche innerhalb eines röhrenförmigen Piezoelements 78 zur Rasterung angeordnet sind.
- Figur 8:: Vorrichtung P4 mit zwei ineinander angeordneten röhrenförmigen Piezoelementen, wie in Figur 6 gezeigt, welche auf einem röhrenförmigen Piezoelement 88 mit selben Außendurchmesser zur Rasterung angeordnet sind.

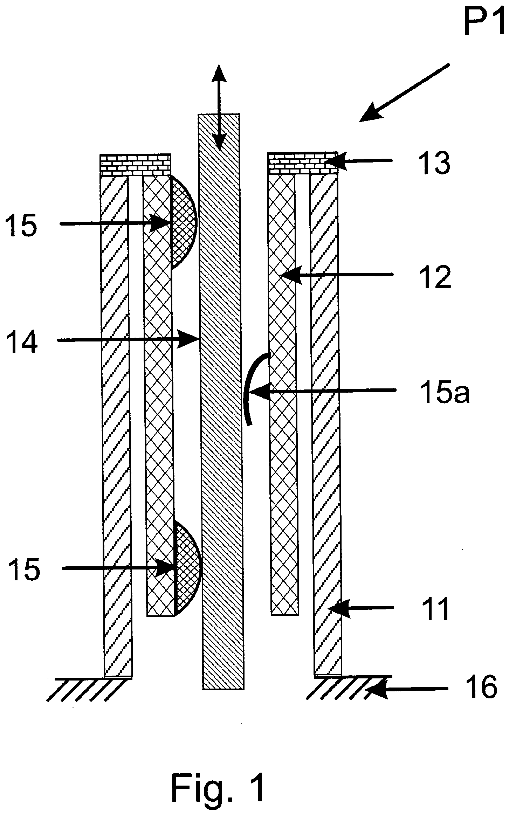

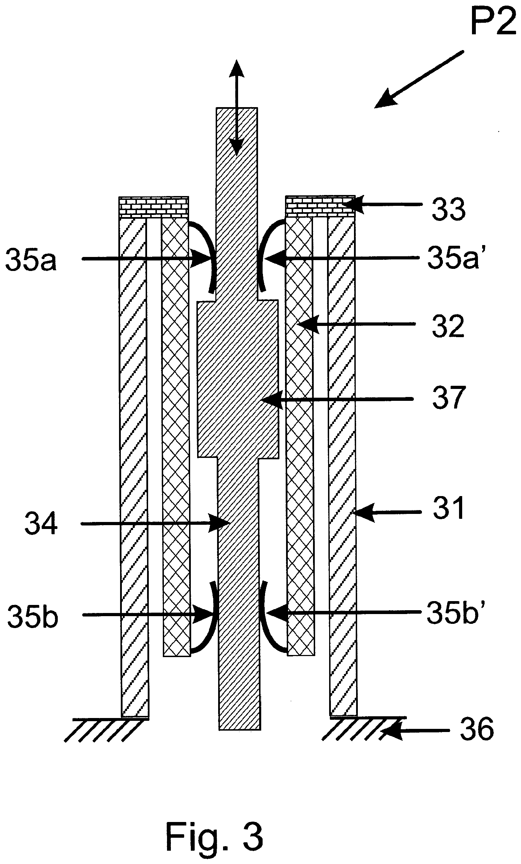

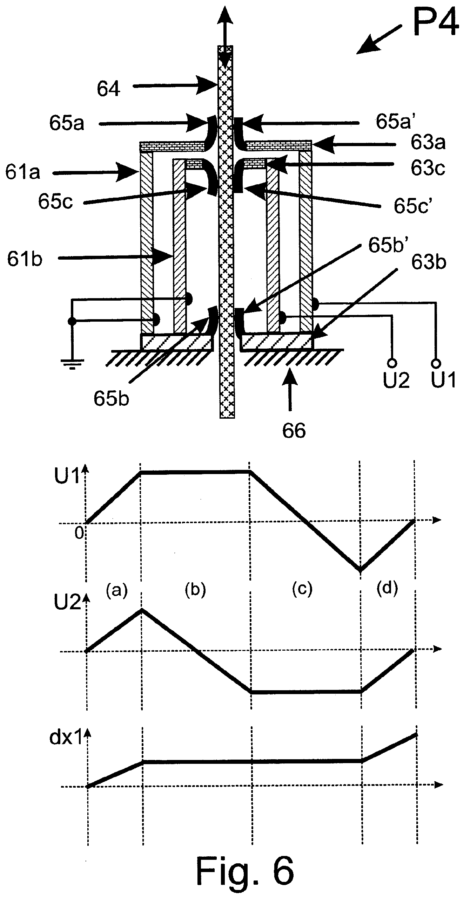

Die Figuren 1, 2, 5 zeigen grobschematisch drei Vorrichtungen P1, P2 und P3 im Längsschnitt. Figur 6 zeigt grobschematisch eine Ausführung der erfindungsgemäßen Vorrichtung P4. Die übrigen Figuren 3, 4, 7 und 8 sind Anwendungen.

Nicht dargestellt sind in den Figuren 1 bis 4 die Anordnungen zur Steuerung der Elektroden an den jeweiligen röhrenförmigen Piezoelementen über Sägezahnpulse. Bei langsamen Zusammenziehen oder Ausdehnen des Piezoelements wird der Läufer mitgeführt (Haftreibung), bei schnellem Zusammenziehen oder Ausdehnen verbleibt der Läufer durch seine Trägheit an seinem Ort (Gleitreibung).

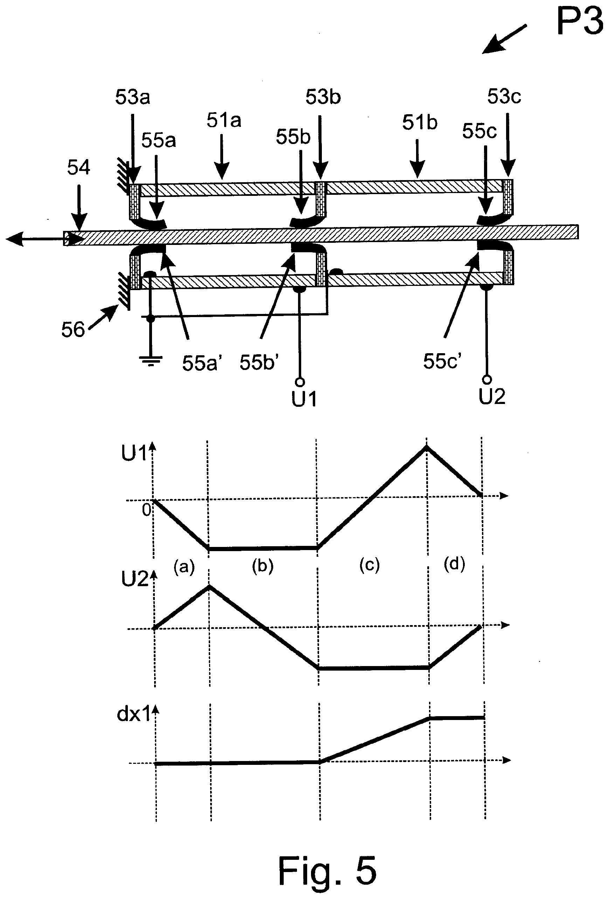

Als röhrenförmiges Piezoelement 11, 21, 31, 41, 51a und 51b, 61a und 61b wird in den Figuren 1 bis 6 ein Piezoelement der Firma PI Ceramic GmbH, Lederhose, Deutschland, mit 12 Millimeter Gesamtlänge verwendet. Bei den Vorrichtungen zur elektromechanischen Positionierung eines Läufers der Figur 1 bis 4 wird der Antrieb für die Trägheitsbewegung jeweils durch genau ein röhrenförmiges Piezoelement 11, 21, 31, 41 geliefert. In den Figuren 5 und 6 wird ein anderer Antrieb vorgestellt.

Der Läufer 14, 24, 34, 44, 54, 64, 74 und 84 ist zylindrisch und besteht aus einem Wolframdraht mit etwa 0,5 Millimeter Durchmesser. Er wird zur Ableitung des Tunnelstroms verwendet und entlang des Doppelpfeils bewegt.

Die Vorrichtung P1, P2, P3 und P4 der Figuren 1 bis 6 weist endständig am Piezoelement lokal eine Keramikscheibe 13, 23, 33, 43, 53a und 53c sowie 63a und 63c mit einer Öffnung als Verbindungselement auf. Die Scheibe ist am Ende des Piezoelements angeklebt. Als Scheibe wird eine Aluminiumoxidkeramik verwendet. Der Innendurchmesser der Öffnung der endständigen Scheibe beträgt 1,2 Millimeter, die Dicke 1 Millimeter und der Durchmesser 3 Millimeter.

An den unteren Teil der in das Innere der Vorrichtung P1, P2 hineinragenden Teil der Scheibe ist parallel zum Innern des Piezoelements und zum Läufer eine röhrenförmige koaxiale Halterung 12, 22, 32, 42 angeklebt. Diese Halterung besteht aus Aluminium oder einer Keramik. Die koaxiale Halterung 12, 22, 32, 42 weist eine Gesamtlänge von 10 mm auf. Der Innendurchmesser beträgt ebenfalls 1,2 Millimeter. Die Halterung 12, 22, 32, 42 ist jeweils in der Hülse 13, 23, 33, 43 durch einen Haftkleber auf Acrylatbasis eingeklebt.

### Erstes Beispiel (Figur 1)

Der Schnitt in Figur 1 zeigt in der oberen und der unteren axialen Position nur eines der beiden statischen Reibungsmittel 15. Tatsächlich sind in beiden axialen Positionen je zwei statische Reibungsmittel angeordnet. Beide Reibungsmittel einer axialen Position sind wiederum jeweils azimutal gleichmäßig zum elastischen Reibungsmittel 15a der mittleren axialen Position angeordnet, um eine exakte axiale Führung des Läufers zu bewirken. Alle 5 Reibungsmittel sind in einer axialen Position über das Verbindungselement 13 am Piezoelement befestigt und bilden somit eine einzige Gruppe von Reibungsmitteln aus.

Das elastische Reibungsmittel 15a ist in Figur 1 axial in der Mitte des koaxialen Halters 12 festgeklebt. Die zusätzlichen unbeweglichen, statischen Reibungsmittel sind mittelbar über die koaxiale Halterung 12 und über die Scheibe 13 mit dem röhrenförmigen Piezoelement 11 verbunden. Sie bestehen aus angeklebten Saphirhalbkugeln 15.

Um den Läufer 14 stabil in axialer Richtung zu führen, sind demnach insgesamt fünf Reibungsmittel verwendet worden, von denen vier statische Reibungsmittel 15 in zwei unterschiedlichen axialen Positionen der koaxialen Halterung angeordnet sind. Vorliegend sind nur die beiden Reibungsmittel links im Bild mit Bezugszeichen 15 versehen. Es ist aber selbstverständlich, dass auf Grund des gewählten Schnitts in der Ebene der oberen und unteren Saphirhalbkugeln 15 je eine weitere Saphirhalbkugel angeordnet ist, die zusammen jeweils azimutal gleichmäßig zum Reibungsmittel 15a angeordnet sind.

Die Vorrichtung P1 gewährleistet eine Übertragung der vollen Auslenkung des Piezoelements auf den Läufer 14.

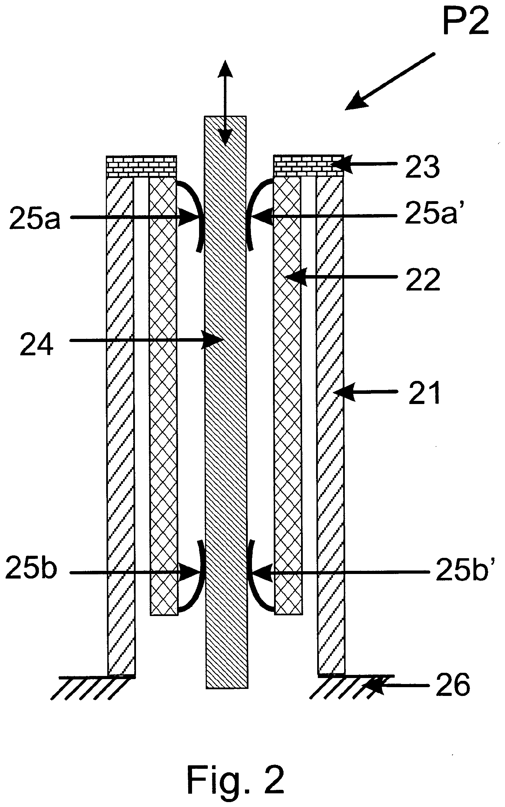

### Zweites Beispiel (Figur 2)

In Beispiel 2 sind zwei federnde Mittel 25a und 25a' in der oberen axialen Position und zwei weitere 25b und 25b' in der unteren axialen Position zur Ausübung der Normalkraft auf den Läufer 24 vorhanden. Diese federnden Mittel, 25a und 25a', werden durch eine Steckverbindung für Drähte gebildet. Dieser Steckverbinder weist eine elastische Feder 25a, 25b und eine federnde, halbkreisförmige Reibungsfläche 25a', 25b' auf, gegen die der Läufer in Betrieb durch die Federkraft gepresst wird.

Der Steckverbinder 25a, 25a' ist endständig an der Scheibe 23 und hierüber mit dem Piezoelement 21 verbunden. Der Verbinder 25b, 25b' ist am freien Ende der röhrenförmigen koaxialen Halterung 22 befestigt und über diese mit dem Piezoelement 21 verbunden. Alle 4 Reibungsmittel sind in einer axialen Position über das Verbindungselement 23 am Piezoelement befestigt und bilden somit eine einzige Gruppe von Reibungsmitteln aus.

Die Vorrichtung P2 gewährleistet eine Übertragung der vollen Auslenkung des Piezoelements auf den Läufer 24 und eine sehr gute axiale Führung des Läufers.

In dieser Ausführung kann der Läufer besonders gut gegen Abweichungen aus der axialen Bewegungsrichtung stabilisiert werden.

### Anwendung 1 der Vorrichtung P2 (Figur 3):

In Figur 3 ist ein Fall einer Anwendung der Vorrichtung P2 aus Figur 2 auf einen axial unterschiedliche Querschnittsflächen aufweisenden Läufer 34 gezeigt. Hier wirkt die größere Querschnittsfläche 37 in der Mitte des Läufers als Stopper, um die Bewegung des Läufers in axialer Richtung zu begrenzen. Durch diese zusätzliche Masse 37, zwischen den Auflagepunkten der Mittel 35a und 35b, und die damit verbundene größere Trägheitskraft können bei der Positionierung größere Kräfte aufgebracht werden und so zum Beispiel größere Massen positioniert werden. An Stelle eines derartigen Läufers kann auch ein nicht zylindrischer Läufer verwendet werden, der entlang der axialen Richtung eingekerbt ist, um eine azimutale Rotation des Läufers während der axialen Translationsbewegung zu verhindern.

Es kann auch an Stelle dessen, ein kegelförmiger Läufer bewegt werden. Dieser kann beispielsweise benutzt werden, um die Geschwindigkeiten in den beiden axialen Richtungen vor und zurück unterschiedlich zu gestalten.

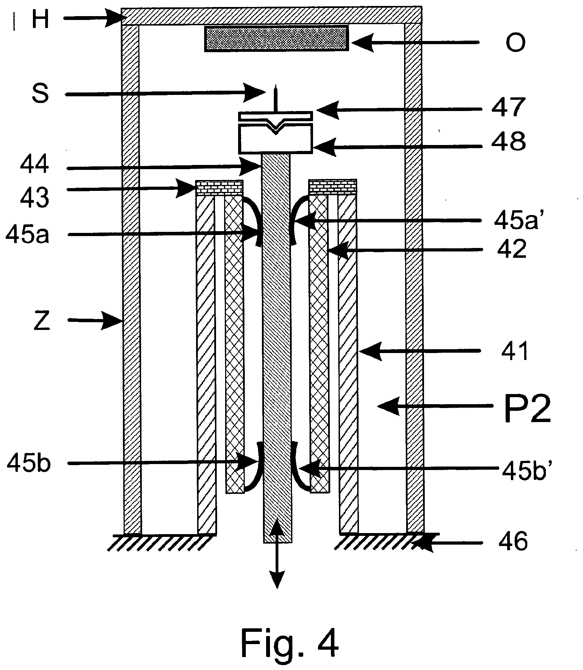

### Anwendung 2 der Vorrichtung P2 (Figur 4):

Die oben bezeichnete Positioniereinheit P2 aus Figur 2 kann als Herzstück eines Rastersondenmikroskops benutzt werden, wie in Figur 4 angegeben.

Ein Objekt O ist oberhalb der Spitze S des Läufers 44 angeordnet. Dazu ist der Objekthalter H mit dem Objekt O in einen Zylinder Z eingeschraubt. Der Zylinder Z umschließt die Vorrichtung P2 mit dem röhrenförmigen Piezoaktuator 41. Sowohl der Zylinder Z, als auch die Vorrichtung P2, sind an einer Basisplatte 46 angeklebt. Die Annäherung der Abtastsonde S an die Probe O erfolgt mittels Sägezahnspannung und Kontraktion sowie Ausdehnung des röhrenförmigen Piezoelements 41. Die xy-Bewegung der Sonde S über die Probe kann dann in bekannter Weise durch das röhrenförmige Piezoelement 41 mit einer in vier Segmente unterteilten äußeren Elektrode erfolgen. Mit dieser Anordnung ist ein sehr kleines und stabiles Rastersondenmikroskop beschrieben. Vorteilhaft sind Abtastsonde S und der Läufer 44 zwei unabhängige Teile. Die Abtastspitze S kann besonders leicht ausgetauscht werden, ohne den Läufer 44 auszutauschen. Das Zwischenstück 48 nimmt den Spitzenhalter auf.

Die beschriebene elektromechanische Positioniereinheit P2 kann auch in umgekehrter Weise wie folgt betrieben werden: Der Läufer 44 wird an mindestens einem Ende mit der großen Masse einer Grundplatte verbunden. Dann wird das Piezoelement, nun nicht mit der Grundplatte verbunden, relativ zum fest stehenden Läufer bewegt.

Alternativ kann in zwei weiteren Ausführungsformen an Stelle der Vorrichtung P2 jeweils die Vorrichtung P1 aus Figur 1 verwendet werden.

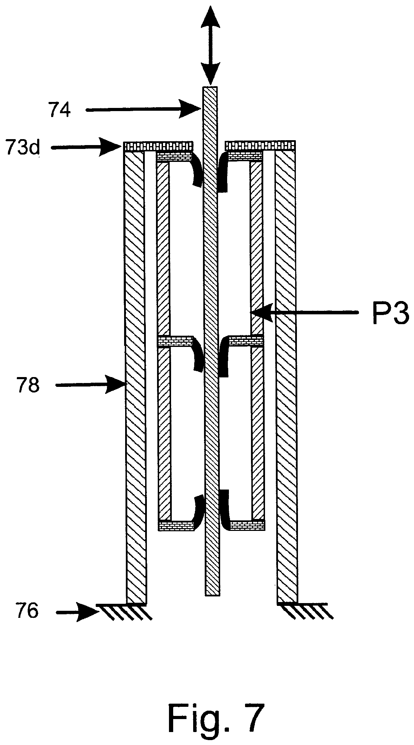

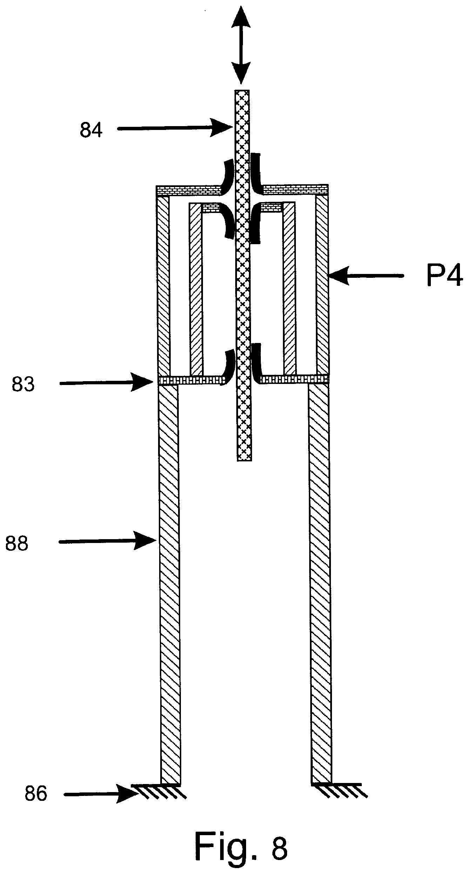

Die in der Figur 5 und in der Figur 6 gezeigten zwei Vorrichtungen P3 und P4 beschreiben ein anderes Verfahren, als den bisher gezeigten Trägheitsantrieb. In der Figur 5 sind zwei Piezoelemente 51a und 51b hintereinander durch eine endständige Scheibe 53b mit Öffnung als Verbindungselement miteinander verbunden worden. In der Figur 6 sind hingegen zwei Piezoelemente mit unterschiedlichem Durchmesser und Länge über die endständige Scheibe 63b als Verbindungselement miteinander verbunden worden. Die Figuren 7 und 8 zeigen die Anwendung der Vorrichtungen nach Figur 5 und Figur 6 für Rastersondenmikroskope.

Sofern nichts anderes angegeben ist, sind die verwendeten Maße und Materialien der Einzelteile zu der Vorrichtung P2 in Figur 2 identisch zu denen der Vorrichtungen P3 und P4 der Figuren 5 und 6.

### Beispiel 3 (Figur 5)

Figur 5 zeigt im oberen Teil die Vorrichtung P3 und darunter ein Verfahren zum Betreiben dieser Vorrichtung.

P3 umfasst zwei mittels des Verbindungselements 53b axial hintereinander verbundene Piezoelemente 51a und 51b.

Die beiden Piezoelemente 51a und 51b der Vorrichtung sind an ihren äußeren, gegenüberliegenden Enden jeweils mit einer endständigen Scheibe als Verbindungselement 53a und 53c versehen. Die röhrenförmigen Piezoelemente sind weiterhin über eine weitere Scheibe 53b axial miteinander verbunden. Eines der röhrenförmigen Piezoelemente 51a ist an seinem freien Ende auf der Unterlage 56 befestigt, während das gegenüberliegende Ende des zweiten Piezoelements unbefestigt ist.

Der Läufer 54 wird axial entlang des Doppelpfeils positioniert. Der Läufer wird durch die drei Gruppen von Reibungsmitteln 55a,a', 55b,b' und 55c,c' gehalten, geführt und bewegt. Die Gruppe 55a und 55a' wird aus einer Steckverbindung gebildet und umfasst die zwei sich am Verbindungselement 53a gegenüberliegenden Federelemente.

Die Gruppe 55b,b' umfasst die zwei sich am Verbindungselement 53b gegenüberliegenden Federelemente. Die Gruppe 55c,c' umfasst die zwei sich am Verbindungselement 53c gegenüberliegenden Federelemente.

Zwei der Gruppen 55a,a' sowie 55c,c' sind an den beiden äußeren Enden der beiden verbundenen Röhren-Piezoelemente 51a und 51b befestigt. Die Gruppe Federelemente 55a und 55a' kann alternativ auch direkt an der Grundplatte 56 befestigt werden.

Um den zylindrischen Läufer 54 relativ gegen die Unterlage 56 zu bewegen, wird eine Gruppe 55b,b' oder 55c,c' mit Hilfe der Piezoelemente 51a und 51b relativ zu den anderen beiden Gruppen, die wiederum relativ zueinander in Ruhe sind, bewegt. Dabei halten die beiden anderen Gruppen, die sich nicht relativ zueinander bewegen, den Zylinder durch ihre Haftreibungskraft fest. Die Haftreibung der dritten Gruppe, welche sich relativ zu den anderen beiden Gruppen bewegt, ist schwächer als die Summe der Haftreibungskräfte der anderen beiden Gruppe. Deshalb geht der Kontakt dieser Gruppe zum Läufer ins Gleiten über.

Im Gegensatz zum Stand der Technik nach US 4,874,979 A1, bei dem zwei Klemmen aktiv mit piezoelektrischem Antrieb geklemmt und gelockert werden, handelt es sich um eine passive Klemmung. Damit bei einer synchronen Bewegung von zwei Gruppen relativ zur dritten Gruppe der Läufer mitgeführt wird, muss die Summe der Haftreibungskräfte der zusammenbewegten Gruppen immer größer sein, als die Haftreibungskraft der einzelnen Gruppe. Der Kontakt zum Läufer 54 geht dann an der einzelnen Gruppe in eine Gleitreibung über, während die Kraft der einzelnen Gruppe nicht ausreicht die Grenzhaftreibungskraft der beiden anderen zusammenbewegten Gruppen aufzubringen.

Sei *F_i* die minimale Kraft, die aufgebracht werden muss, um eine Gruppe i zum Gleiten zu bringen, so muss für die drei Gruppen 55a,a' sowie 55b,b' sowie 55c,c' gelten: F_i + F_j > F_k, mit i, j, k = 55a,a', 55b,b', 55c,c' und i ≠ j≠ k.

Nachfolgend wird eine Periode eines Spannungsverlaufes an den Piezoelementen 51a und 51b beschrieben, der zu einer Verschiebung des Läufers in der Bildfläche nach rechts führt (siehe Figur 5). Es wird dabei vorausgesetzt, dass eine positive Spannung am jeweiligen Piezoelement zu dessen Ausdehnung entlang der Zylinderachse führt und eine negative Spannung zu einer Kontraktion.

Eine Periode der Bewegung beginnt im Zustand, in dem beide Piezoelemente 51a und 51b spannungslos im Ruhezustand sind.

Im Teilabschnitt (a) des Spannungsverlaufes (siehe Figur 5, unterer Bildausschnitt) zieht sich das erste Piezoelement 51a zusammen (negative Spannung) und dehnt sich das zweite Piezoelement 51b aus (positive Spannung). Dies führt zu einer Gleitreibung der mittleren Gruppe 55b,b' nach links. Die rechte Gruppe 55c,c' verändert ihre Position nicht, denn das Piezoelement 51a verkürzt sich während das Piezoelement 51b sich verlängert, so dass netto keine Änderung in der Position der rechten Gruppe 55c,c' gegenüber der Grundplatte erfolgt, ebenso wenig wie die linke Gruppe 55a,a', welche sich nie relativ zur der Grundplatte 56 bewegt. Die beiden unbewegten Gruppen halten den Läufer 54 fest, während die dritte mittlere Gruppe 55b,b' in eine Gleitreibung relativ zum Läufer übergeht und sich nach links bewegt.

Im zweiten Teilabschnitt (b) des Spannungsverlaufes in Figur 5 bleibt die Ausdehnung des linken Piezoelements 51a unverändert, das heißt kontrahiert. Damit bewegen sich die linke Gruppe 55a,a' und die mittlere Gruppe 55b,b' nicht relativ zur Basisplatte 56 des Nanomanipulators und halten damit den Läufer 54 auf Grund der etwa doppelten Haftreibungskraft fest. Während sich das rechte Piezoelement 51b von maximal ausgedehnt zu maximal kontrahiert, gleitet die rechte Gruppe 55c,c' relativ zum Läufer 54, der von den beiden linken Gruppen 55a,a' und 55c,c' festgehalten wird, nach links.

Im dritten Teilabschnitt (c) wird das Piezoelement 51a ausgedehnt. Dadurch werden die beiden rechten Gruppen 55b,b' und 55c,c' zusammen nach rechts bewegt und führen den Läufer 54 mit sich. An der linken Gruppe 55a,a' geht der Kontakt zum Läufer 54 in eine Gleitreibung über. In diesem Teilabschnitt bewegt sich der Läufer nach rechts.

Der vierte Teilabschnitt (d) ist ähnlich zum ersten Teilabschnitt. Das erste Piezoelement 51a kontrahiert und das zweite Piezoelement 51b dehnt sich aus. Dies führt zu einer Gleitreibung der mittleren Gruppe 55b,b' nach links, bis sich beide Piezoelemente wieder im spannungslosen Ausgangszustand befinden.

Das Bewegungsmuster lässt sich folgendermaßen zusammenfassen: Zunächst bewegen sich die mittlere Gruppe 55b,b' und die rechte Gruppe 55c,c' einzeln nach links. Dabei bewegt sich der Läufer 54 nicht. Er wird immer von den anderen beiden Gruppen festgehalten. Dann bewegen sich die beiden rechten Gruppen 55b,b' und 55c,c' zusammen nach rechts und führen den Läufer 54 mit sich nach rechts. Innerhalb einer Periode der Bewegung wird der Läufer des Nanopositionierers um diejenige Strecke nach rechts bewegt, die dem Hub eines Piezoelements von maximaler Spannung zu minimaler Spannung entspricht.

Eine Bewegung nach links erfolgt mit invertierten Spannungsverläufen.

Unterschiedliche Piezolängen können durch eine entsprechend angepasste Spannungsamplitude kompensiert werden, dergestalt, dass der Hub der Reibungsmittel 55b,b' derselbe ist wie der Hub der Reibungsmittel 55c,c'.

### Ausführunsgbeispiel (Figur 6)

Figur 6 zeigt im oberen Teil die Vorrichtung P4 und darunter den Spannungsverlauf für ein erfindungsgemäßes Verfahren zum Betreiben dieser Vorrichtung.

P4 umfasst zwei mittels des Verbindungselements 63b axial ineinander angeordnete Piezoelemente 61a, 61b. Das Piezoelement 61a weist einen größeren Außendurchmesser von 6 mm und eine Länge von 13 Millimetern auf, so dass es das Piezoelement 61b in sich aufnehmen kann.

Die beiden Piezoelemente 61a und 61b der Vorrichtung P4 sind an ihren äußeren identisch ausgerichteten Enden jeweils mit einem Verbindungselement 63a und 63c versehen, wobei die Öffnungen der Scheiben axial direkt übereinander angeordnet sind, so dass der Läufer 64 axial darin bewegt werden kann.

Die röhrenförmigen Piezoelemente 61a und 61b sind über ein Verbindungselement zum Beispiel eine Scheibe 63b als Verbindungselement an ihrem Ende zur Grundplatte des Nanopositionierers hin miteinander verbunden. Beide röhrenförmigen Piezoelemente 61a und 61b werden an diesem Ende auf einer Grundplatte 66 des Positionierers befestigt, während das jeweils gegenüberliegende Ende der Piezoelemente unbefestigt und zum Objekt (nicht dargestellt) gerichtet ist.

Der Läufer 64 wird axial entlang des Doppelpfeils positioniert. Der Läufer wird durch die drei Gruppen Federelemente 65a,a' sowie 65b,b' sowie 65c,c' gehalten, geführt und bewegt.

Die Öffnungen der drei Scheiben 63a, 63b und 63c sind axial übereinander angeordnet, so dass der Läufer in diesen axial positioniert werden kann.

Zwei dieser Gruppen 65a,a' sowie 65c,c' sind an den äußeren Enden der zusammengefügten Piezoelemente 61a und 61b angeordnet, während die dritte Gruppe 65b,b' weiter entfernt von den beiden anderen Gruppen an dem Verbindungselement 63b angebracht ist, welches beide Piezoelemente miteinander verbindet.

Um den zylindrischen Läufer 64 relativ gegen die Unterlage 66 zu bewegen, wird eine Gruppe 65a,a' oder 65c,c' mit Hilfe der Piezoelemente 61a und 61b relativ zu den anderen beiden Gruppen, die wiederum relativ zueinander in Ruhe sind, bewegt. Dabei halten die beiden anderen Gruppen, die sich nicht relativ zueinander bewegen, den Zylinder durch die Haftreibungskraft fest. Die Haftreibung der dritten Gruppe, die sich relativ zu den anderen beiden Gruppen bewegt, ist schwächer. Deshalb geht der Kontakt dieser Gruppe zum Läufer ins Gleiten über.

Es handelt sich dabei wiederum um eine passive Klemmung. Damit bei einer synchronen Bewegung von zwei Gruppen relativ zur dritten Gruppe der Läufer mitgeführt wird, muss die Summe der Haftreibungskräfte der zusammenbewegten Gruppen immer größer sein, als die Haftreibungskraft der einzelnen Gruppe. Der Kontakt zum Läufer 64 geht dann an der einzelnen Gruppe in Gleitreibung über, während die Kraft der einzelnen Gruppe nicht ausreicht die Grenzhaftreibungskraft der beiden anderen zusammenbewegten Gruppen aufzubringen.

Sei *F_i* die minimale Kraft, die aufgebracht werden muss, um eine Gruppe *i* zum Gleiten zu bringen, so muss auch für diese drei Gruppen 65a,a', 65b,b' und 65c,c' gelten: F_i + F_j > F_k, mit i, j, k = 65a,a', 65b,b', 65c,c' und i ≠ j ≠ k.

Nachfolgend wird eine Periode eines Spannungsverlaufes an den Piezoelementen 61a und 61b beschrieben, der zu einer Verschiebung des Läufers in der Bildfläche nach oben führt (siehe Figur 6). Es wird dabei vorausgesetzt, dass eine positive Spannung am jeweiligen Piezoelement 61a und 61b zu dessen Ausdehnung entlang der Zylinderachse führt und ein negativer Spannungsverlauf zu einer Kontraktion.

Eine Periode der Bewegung beginnt im Zustand, in dem beide.Piezoelemente 61a und 61b spannungslos im Ruhezustand sind.

Im Teilabschnitt (a) des Spannungsverlaufes dehnt sich das äußere Piezoelement 61a und das innere Piezoelement 61b aus (jeweils positive Spannung). Dies führt zu einer Haftreibung der mittleren Gruppe 65c,c' und der oberen Gruppe 65a,a' während sich die beiden Piezoelemente 61a und 61c nach oben ausdehnen. Die untere Gruppe 65b,b' verändert ihre Position auf Grund der Position an der Basisplatte 66 nicht. An den Reibungsflächen zwischen den Federelementen 65b und 65b' und dem Läufer geht der Läufer in Gleitreibung über und bewegt sich relativ zur Grundplatte 66 nach oben. Die beiden bewegten Gruppen halten den Läufer 64 fest, während der Läufer in Gleitreibung relativ zur dritten unteren Gruppe 65b,b' übergeht.

Im zweiten Teilabschnitt (b) des Spannungsverlaufes in Figur 6 bleibt die Ausdehnung des äußeren Piezoelements 61a unverändert. Das innere Piezoelement 61b kontrahiert auf Grund des negativen Spannungsverlaufs. Damit geht die Gruppe 65c,c' in Gleitreibung über und bewegt sich nach unten, wohingegen die obere Gruppe 65a,a' und die untere Gruppe 65b,b' sich nicht relativ zur Basisplatte 66 bewegen und damit den Läufer 64 auf Grund der etwa doppelten Haftreibungskraft festhalten. Während sich das innere Piezoelement 61b von maximal ausgedehnt nun maximal kontrahiert, gleitet die Gruppe 65c,c' relativ zum Läufer 64, der von den beiden Gruppen 65a,a' und 65c,c' festgehalten wird, nach unten.

Im dritten Teilabschnitt (c) wird das äußere Piezoelement 61a kontrahiert. Dadurch wird die Gruppe 65a,a' allein in eine Gleitreibung überführt relativ zum Läufer nach unten bewegt. Der Läufer verbleibt absolut an seiner z-Koordinate auf Grund der höheren Kräfte an den beiden anderen Gruppen 65b,b' und 65c,c'. An der oberen Gruppe 65a,a' geht der Kontakt zum Läufer 64 in eine Gleitreibung über. In diesem Teilabschnitt bewegt sich der Läufer nicht.

Der vierte Teilabschnitt (d) ist ähnlich zum ersten Teilabschnitt. Beide Piezoelemente 61a und 61b dehnen sich wegen positivem Spannungsverlauf aus. Dies führt zur Mitnahme des Läufers 64 nach oben. Die untere Gruppe 65b,b' verändert ihre Position auf Grund der Position an der Basisplatte 66 nicht. An den Reibungsflächen zwischen den Federelementen 65b und 65b' und dem Läufer geht der Läufer in Gleitreibung über und bewegt sich relativ zur Grundplatte 66 nach oben. Das Bewegungsmuster lässt sich folgendermaßen zusammenfassen: Zunächst bewegen sich die beiden oberen Gruppen 65a,a' und 65c,c' aus je zwei elastischen Biegeelementen zusammen nach oben. Dabei wird der Läufer 64 mitgeführt. Dann bewegen sich nacheinander diese beiden Gruppen einzeln nach unten, wobei der Läufer 64 unverändert verharrt. Innerhalb einer Periode der Bewegung wird der Läufer des Nanopositionierers um diejenige Strecke nach oben bewegt, die dem Hub eines Piezoelements von maximaler Spannung zu minimaler Spannung entspricht.

Unterschiedliche Piezolängen können durch eine entsprechend angepasste Spannungsamplitude kompensiert werden, dergestalt, dass der Hub der Reibungsmittel 65a,a' derselbe ist, wie der Hub der Reibungsmittel 65c,c'.

### Anwendung 1 der Vorrichtung P3 aus Figur 5 (Figur 7):

Die oben beschriebene Positioniereinheit P3 aus der Figur 5 kann als Herzstück eines Rastersondenmikroskops benutzt werden. Die Vorrichtung P3 aus Figur 5 wird dabei innerhalb eines röhrenförmigen Piezoelements 78 mit größerem Durchmesser gehaltert, welches auf einer Grundplatte 76 montiert ist. Die Vorrichtung P3 wird dabei über einen Halter 73d am Ende des äußeren Piezoelements 78 befestigt. Dann kann am oberen Ende des Läufers 74 eine Abtastsonde angebracht werden und eine Probe oberhalb der Abtastsonde gerastert werden.

Eine kontinuierliche Bewegung in xy-Richtung ist durch eine vierfache Segmentierung des Piezoelements 78 entlang der Längsachse möglich.

Das Piezoelement 78 kann auch für eine Feinbewegung in z-Richtung mittels kontinuierlicher Spannungsveränderung am Piezoelement 78 benutzt werden.

### Anwendung 1 der Vorrichtung P4 aus Figur 6 (Figur 8):

Die oben beschriebene Positioniereinheit P4 aus der Figur 6 kann als Herzstück eines Rastersondenmikroskops benutzt werden. Die Vorrichtung P4 aus Figur 6 wird dabei auf einem röhrenförmigen Piezoelement 88 mit identischem Durchmesser gehaltert, welches auf einer Grundplatte 86 montiert ist. Die Vorrichtung P4 wird dabei über einen Halter 83 am Ende des Piezoelements 88 befestigt. Am oberen Ende des Läufers 84 kann eine Abtastsonde angebracht werden und eine Probe oberhalb der Abtastsonde gerastert werden.

Eine kontinuierliche Bewegung in xy-Richtung ist durch eine vierfache Segmentierung des Piezoelements 88 entlang der Längsachse möglich.

Das Piezoelement 88 kann auch für eine Feinbewegung in z-Richtung mittels kontinuierlicher Spannungsveränderung am Piezoelement 88 benutzt werden.

Jede der Vorrichtungen P1 bis P4 kann ebenfalls alleine das Herzstück eines Rastersondenmikroskops darstellen. Dabei kann die Feinbewegung in xy- und auch in z-Richtung durch das Anlegen von kontinuierlichen Spannungen an die Piezoelemente erreicht werden.

## Patentansprüche

1. Vorrichtung mit zwei röhrenförmigen Piezoelementen (61a, 61b) zur elektromechanischen Positionierung eines Läufers (64) im Innern entlang der Längsachse der röhrenförmigen Piezoelemente, (61a, 61b) umfassend zwei ineinander, elektrisch isoliert zueinander angeordnete Piezoelemente (61a, 61b) und wenigstens drei Gruppen von Reibungsmitteln, (65a, 65a', 65b, 65b', 65c, 65c') die entlang der Längsachse der röhrenförmigen Piezoelemente (61a, 61b) an axial unterschiedlichen Positionen an den Piezoelementen (61a, 61b) befestigt sind und bei der die Reibungsmittel, (65a, 65a', 65b, 65b', 65c, 65c') welche an einer Position des Piezoelements befestigt sind, eine Gruppe von Reibungsmitteln ausbilden, wobei wenigstens eine Gruppe ein elastisches Reibungsmittel (65a, 65a', 6b, 65b', 65c, 65c') mit einer Reibungsfläche zur Ausübung einer permanenten, konstanten Normalkraft auf die Oberfläche des Läufers (64) umfasst, welche zur Positionierung des Läufers (64) mit Hilfe abwechselnder Gleitreibung und Haftreibung geeignet ist.

2. Vorrichtung nach Anspruch 1,
**dadurch gekennzeichnet, dass**
dass wenigstens die zwischen den beiden äußeren Gruppen (65a, 65a', 65b, 65b') von Reibungsmitteln, die in axial unterschiedlicher Position an den Piezoelementen (61a, 61b) befestigt sind, befestigte Gruppe (65c, 65c') von Reibungsmitteln aus elastischen Reibungsmitteln besteht.

3. Verfahren zur Positionierung eines Läufers (64) mit einer Vorrichtung nach Anspruch 1 oder 2,
bei dem ein Spannungsverlauf an den Elektroden der beiden Piezoelemente (61a, 61b) angelegt wird, bei dem eine Kontraktion oder Ausdehnung der Piezoelemente (61a, 61b) zu einer axialen Positionierung des Läufers (64) entlang der Längsachse der röhrenförmigen Piezoelemente (61a, 61b) führt, wobei in einem Teil des Spannungsverlaufs jeweils eine Gruppe von Reibungsmitteln (65a, 65a', 65b, 65b', 65c, 65c') einer axialen Position bewegt und während dieser Bewegung der Läufer (64) von zwei anderen Gruppen von Reibungsmitteln (65a, 65a', 65b, 65b', 65c, 65c') festgehalten wird und in einem weiteren Schritt des Spannungsverlaufs zwei Gruppen von Reibungsmitteln (65a, 65a', 65b, 65b', 65c, 65c') gleichzeitig bewegt werden und den Läufer (64) mit sich führen.

## Claims

1. Device with two two tubular piezo elements (61a, 61b) for the electromechanical positioning of a rotor (64) in the interior along the longitudinal axis of the tubular piezo elements, (61a, 61b) comprising two piezo elements (61a, 61b) arranged to be interlocking and electrically insulated from each other and at least three sets of friction agents (66a, 65a', 65b, 65b', 65c, 65c') which are attached along the longitudinal axis of the tubular piezo elements (61a, 61b) at axially different positions to the piezo elements (61a, 61b) and in which the friction agents, (65a, 65a', 65b, 65b', 65c, 65c'), which are attached at one position of the piezo element, form a set of friction agents in which at least one set comprises an elastic friction agent (65a, 65a', 65b, 65b', 65c, 65c') with a friction surface to exert a permanent, constant normal force on the surface of the rotor (64), which is suitable for the positioning of the rotor (64) with the aid of alternating sliding friction and static friction.

2. Device in accordance with claim 1 **characterised in that** at least the set (65c, 65c') of friction agents fastened between both outside sets (65a, 65a', 65b, 65b') of friction agents, which are attached at axially different positions to the piezo elements (61a, 61b), consists of elastic friction agents.

3. Process for the positioning of a rotor (64) with a device in accordance with claim 1 or 2, in which a voltage curve is applied to the electrodes of both piezo elements (61a, 61b), in which a contraction or expansion of the piezo elements (61a, 61b) results in an axial positioning of the rotor (64) along the longitudinal axis of the tubular piezo elements (61a, 61b), in which in one part of the voltage curve one set of friction agents (65a, 65a', 65b, 65b', 65c, 65c') moves in each case to an axial position and the two other sets of friction agents (65a, 65a', 65b, 65b', 65c, 65c') are retained during this movement of the rotor (64) and in a further step of the voltage curve two sets of friction agents (65a, 65a', 65b, 65b', 65c, 65c') are moved simultaneously and take the rotor (64) with them.

## Revendications

1. Dispositif avec deux piézoéléments (61a, 61b) tubulaires pour le positionnement électromécanique d'un rotor (64) à l'intérieur le long de l'axe longitudinal des piézoéléments (61a, 61b) tubulaires, comprenant deux piézoéléments (61a, 61b) agencés de manière électriquement isolée l'un de l'autre, l'un dans l'autre et au moins trois groupes de moyens de friction (65a, 65a', 65b, 65b', 65c, 65c') qui sont fixés le long de l'axe longitudinal des piézoéléments (61a, 61b) tubulaires au niveau de positions différentes axialement aux piézoéléments (61a, 61b) et où les moyens de friction (65a, 65a', 65b, 65b', 65c, 65c'), qui sont fixés au niveau d'une position du piézoélément, réalisent un groupe de moyens de friction, dans lequel au moins un groupe comprend un moyen de friction (65a, 65a', 6b, 65b', 65c, 65c') élastique avec une surface de friction pour l'exercice d'une force normale constante, permanente sur la surface du rotor (64), lequel est approprié au positionnement du rotor (64) à l'aide d'un frottement de glissement et d'un frottement d'adhérence alternatifs.

2. Dispositif selon la revendication 1,
**caractérisé en ce que**
qu'au moins le groupe (65c, 65c'), fixé entre les deux groupes extérieurs (65a, 65a', 65b, 65b') de moyens de friction qui sont fixés dans une position différente axialement aux piézoéléments (61a, 61b), se compose de moyens de friction élastiques.

3. Procédé de positionnement d'un rotor (64) avec un dispositif selon la revendication 1 ou 2, où une courbe de tension est créée au niveau des électrodes des deux piézoéléments (61a, 61b), où une contraction ou une extension des piézoéléments (61a, 61b) mène à un positionnement axial du rotor (64) le long de l'axe longitudinal des piézoéléments (61a, 61b) tubulaires, dans lequel, dans une partie de la courbe de tension, respectivement un groupe de moyens de friction (65a, 65a', 65b, 65b', 65c, 65c') d'une position axiale est déplacé et pendant ce déplacement le rotor (64) est maintenu par deux autres groupes de moyens de friction (65a, 65a', 65b, 65b', 65c, 65c') et dans une autre étape de la courbe de tension deux groupes de moyens de friction (65a, 65a', 65b, 65b', 65c, 65c') sont déplacés simultanément et entraînent avec eux le rotor (64).
